# EUROPEAN PATENT APPLICATION

(11) **EP 4 181 380 A1**
(43) Date of publication of application: **17.05.2023**
(21) Application number: 22207485.8
(22) Date of filing: 15.11.2022
(51) Int. Cl.: H02M 3/335, H02M 3/00, H02M 1/00

(54) **SWITCHING POWER SUPPLY CIRCUIT**

(30) Priority: 15.11.2021 CN 202111349904
(71) Applicant: Silergy Semiconductor Technology (Hangzhou) Ltd, Hangzhou City, Zhejiang Province 310051 (CN)
(72) Inventor: ZHANG, Xiahe, Hangzhou City, Zhejiang Province, 310051 (CN); DENG, Jian, Hangzhou City, Zhejiang Province, 310051 (CN)
(74) Representative: Viering, Jentschura & Partner mbB Patent- und Rechtsanwälte

(57) **Abstract**

The present disclosure provides a switching power supply circuit including: a transformer, comprising a primary winding and a secondary winding; a resonant capacitor and a resonant inductor, connected in series with the primary winding to form a series structure; a power switch module, receiving an input voltage and connecting two terminals of the series structure to form a resonance circuit; an output rectification module, connected to the secondary winding and generating an output voltage; an operating mode control module, receiving the input voltage and the output voltage, controlling the output rectification module such that the switching power supply circuit is operated in LLC mode when a ratio of the input voltage and the output voltage is smaller than or equal to a predetermined value, and controlling the output rectification module such that the switching power supply circuit is operated in AHB mode when the ratio of the input voltage and the output voltage is greater than the predetermined value. The disclosure unifies the topologies of AHB and LLC, and enables the switching power supply circuit to have the advantages of high efficiency and wide input and output range at the same time by switching the topology operating modes.

## Description

### BACKGROUND

### 1. Field of the Disclosure

The present disclosure relates to the field of circuit design, in particular to a switching power supply circuit.

### 2. Description of Related Art

Switching power supply is a power supply that uses modern power electronics technology to control the time ratio of turning on and off of the switch to maintain a stable output voltage. Switching power supplies are generally composed of pulse width modulation (PWM) control ICs and MOSFETs. With the development and innovation of the power electronics technology, switching power supply technology continues to be innovated. Switching power supply is widely used in almost all electronic devices due to its characteristics of small size, light weight and high efficiency, and is an indispensable power supply way for the rapid development of the electronic information industry.

LLC (inductor-inductor-capacitor) topology and AHB (Asymmetrical Half-Bridge) topology are two common topologies for the switching power supplies. Among them, LLC topology uses the structure of the resonant inductance, the excitation inductance and the resonant capacitor in series, which has high efficiency. However, the frequency changes too much when applied in a wide range, and the efficiency will be sacrificed if the control of LLC topology is not well. The input and output of the AHB topology may achieve a wide range. Nevertheless, when AHB topology is fully loaded, the transformer can only transfer the load energy during a portion of the time, and the efficiency is slightly lower than that of the LLC. Accordingly, AHB topology is not suitable for the conditions that require relatively high power density and efficiency.

Therefore, how to simultaneously satisfy the wide input and output voltage range and high system efficiency of the switching power supply has become one of the problems to be solved urgently for those skilled in the art.

### SUMMARY

In view of the above-mentioned shortcomings of the prior art, the objective of the present disclosure is to provide a switching power supply circuit used to solve the problem that the wide input and output voltage range and high system efficiency of the switching power supply in the prior art cannot be taken into account at the same time.

In order to achieve the above purpose and other related purposes, the present disclosure provides a switching power supply circuit. The switching power supply circuit at least includes a transformer, a resonant capacitor and a resonant inductor, a power switch module, an output rectification module and an operating mode control module.

The transformer comprises a primary winding and a secondary winding.

The resonant capacitor and the resonant inductor are connected in series with the primary winding to form a series structure.

The power switch module receives an input voltage and connects two terminals of the series structure to form a resonance circuit.

The output rectification module is connected to the secondary winding and generating an output voltage.

The operating mode control module receives the input voltage and the output voltage, controls the output rectification module such that the switching power supply circuit is operated in LLC mode when a ratio of the input voltage and the output voltage is smaller than or equal to a predetermined value, and controls the output rectification module such that the switching power supply circuit is operated in AHB mode when the ratio of the input voltage and the output voltage is greater than the predetermined value.

Optionally, the power switch module comprises a first power switch and a second power switch connected in series between the input voltage and a reference ground, control terminals of the first power switch and the second power switch receive a switch control signal. A first terminal of the series structure is connected to a connection node of the first power switch and the second power switch, and a second terminal of the series structure is grounded.

Optionally, the power switch module comprises a third power switch, a fourth power switch, a fifth power switch and a sixth power switch. The third power switch and the fourth power switch are connected in series between the input voltage and the reference ground. The fifth power switch and the sixth power switch are connected in series between the input voltage and the reference ground. The control terminals of the third power switch, the fourth power switch, the fifth power switch and the sixth power switch receive the switch control signal. A first terminal of the series structure is connected to a connection node of the third power switch and the fourth power switch, and a second terminal of the series structure is connected to a connection node of the fifth power switch and the sixth power switch.

Optionally, the predetermined value is k^{∗}N, wherein k is a real number smaller than or equal to 5, and N is a turns ratio of the primary winding and the secondary winding in the transformer.

More optionally, the secondary winding comprises a first secondary winding and a second secondary winding; the output rectification module comprises a first switch unit and a second switch unit.

A current input terminal of the first switch unit is connected to a dotted terminal of the first secondary winding and the primary winding, and a current output terminal of the first switch unit is connected to an upper plate of an output capacitor. When the switching power supply circuit is operated in LLC mode, the first switch unit is turned on and rectifies a signal inputted to the first switch unit, and when the switching power supply circuit is operated in AHB mode, the first switch unit is turned off.

A current input terminal of the second switch unit is connected to a non-dotted terminal of the second secondary winding and the primary winding, and a current output terminal of the second switch unit is connected to an upper plate of the output capacitor. When the switching power supply circuit is operated in LLC mode, and when the switching power supply circuit is operated in AHB mode, a signal inputted to the second switch unit is rectified.

A lower plate of the output capacitor, a non-dotted terminal of the first secondary winding and the primary winding, and a dotted terminal of the second secondary winding and the primary winding are grounded.

More optionally, the first switch unit is a bidirectional switch, comprising two synchronous rectification switches connected in series in opposite phases.

More optionally, the first switch unit comprises a first switch and a second switch connected in series, and an operating frequency of the second switch is smaller than an operating frequency of the first switch.

More optionally, the first switch is a synchronous rectification switch or a rectification diode, and the second switch is a relay or a semiconductor switch.

More optionally, the second switch unit is a synchronous rectification switch or a rectification diode.

More optionally, the secondary winding comprises a third secondary winding and a fourth secondary winding. The output rectification module comprises a third switch unit, a fourth switch unit, a fifth switch unit, a first capacitor and a second capacitor.

A current input terminal of the third switch unit is connected to a dotted terminal of the third secondary winding and the primary winding, and a current output terminal of the third switch unit is connected to an output capacitor and an upper plate of the first capacitor. When the switching power supply circuit is operated in LLC mode, the third switch unit is turned on and rectifies a signal inputted to the third switch unit, and when the switching power supply circuit is operated in AHB mode, the third switch unit is turned off.

A lower plate of the first capacitor is connected to a non-dotted terminal of the third secondary winding and the primary winding.

The fourth switch unit is connected in parallel with both terminals of the first capacitor, the fourth switch unit is turned off when the switching power supply circuit is operated in LLC mode, and the fourth switch unit is turned on when the switching power supply circuit is operated in AHB mode.

A current input terminal of the fifth switch unit is grounded, and a current output terminal of the fifth switch unit is connected to a dotted terminal of the fourth secondary winding and the primary winding. When the switching power supply circuit in LLC mode, and when the switching power supply circuit in AHB mode, a signal inputted to the fifth switch unit is rectified.

An upper plate of the second capacitor is connected to a non-dotted terminal of the fourth secondary winding and the primary winding, and a lower plateof the second capacitor is grounded.

A lower plate of the output capacitor is grounded. A non-dotted terminal of the third secondary winding and the primary winding is connected to a non-dotted terminal of the fourth secondary winding and the primary winding.

More optionally, the third switch unit is a bidirectional switch, comprising two synchronous rectification switches connected in series in opposite phases.

More optionally, the third switch unit comprises a first switch and a second switch connected in series, and an operating frequency of the second switch is smaller than an operating frequency of the first switch.

More optionally, the first switch is a synchronous rectification switch or a rectification diode, and the second switch is a relay or a semiconductor switch.

More optionally, the fourth switch unit is a relay or a semiconductor switch.

More optionally, the fifth switch unit is a synchronous rectification switch or a rectification diode.

More optionally, the secondary winding comprises a fifth secondary winding. The output rectification module includes a sixth switch unit, a seventh switch unit, an eighth switch unit and a ninth switch unit.

A current input terminal of the sixth switch unit is connected to a dotted terminal of the fifth secondary winding and the primary winding, and a current output terminal of the sixth switch unit is connected to an upper plate of an output capacitor. A signal inputted to the sixth switch unit is rectified when in both of the LLC mode and the AHB mode.

A current input terminal of the seventh switch unit is grounded, and a current output terminal is connected to a current input terminal of the sixth switch unit; a signal inputted to the seventh switch unit is rectified when the switching power supply circuit in LLC mode, and when the switching power supply circuit in AHB mode.

A current input terminal of the eighth switch unit is connected to a non-dotted terminal of the fifth secondary winding and the primary winding, and a current output terminal of the eighth switch unit is connected to an upper plate of the output capacitor. A signal inputted to the eighth switch unit is rectified when the switching power supply circuit in LLC mode, and when the switching power supply circuit inAHB mode.

A current input terminal of the ninth switch unit is grounded, and a current output terminal of the ninth switch unit is connected to a current input terminal of the eighth switch unit. When the switching power supply circuit in LLC mode, the ninth switch unit is turned on and rectifies a signal inputted to the ninth switch unit, and when the switching power supply circuit in AHB mode, the ninth switch unit is turned off.

A lower plate of the output capacitor is grounded.

More optionally, the sixth switch unit is a synchronous rectification switch or a rectification diode, the seventh switch unit is a synchronous rectification switch or a rectification diode, and the eighth switch unit is a synchronous rectification switch or a rectification diode.

More optionally, the ninth switch unit is a bidirectional switch, comprising two synchronous rectification switches connected in series in opposite phases.

More optionally, the ninth switch unit comprises a first switch and a second switch connected in series, and an operating frequency of the second switch is smaller than an operating frequency of the first switch.

More optionally, the first switch is a synchronous rectification switch or a rectification diode, and the second switch is a relay or a semiconductor switch.

As mentioned above, the switching power supply circuit of the present disclosure has the following beneficial effects:

The switching power supply circuit of the present disclosure controls the switching power supply system to operate in LLC mode when the input-output ratio is appropriate, and to operate in AHB mode under other operating conditions. As such, the advantages of high efficiency and wide input-output voltage range may be simultaneously achieved.

### BRIEF DESCRIPTION OF THE DRAWINGS

FIG. 1 is a schematic block diagram of a switching power supply circuit of the present disclosure.
FIG. 2 is a schematic structural diagram of the first implementation manner of the switching power supply circuit of the present disclosure.
FIG. 3 is a schematic diagram illustrating an implementation manner of the first switch unit of the present disclosure.
FIG. 4 is a schematic diagram illustrating another implementation manner of the first switch unit of the present disclosure.
FIG. 5 is a schematic diagram illustrating yet another implementation manner of the first switch unit of the present disclosure.
FIG. 6 is a schematic diagram of the waveforms on each node of the first implementation manner of the switching power supply circuit of the present disclosure.
FIG. 7 is a schematic structural diagram of the first implementation manner of the switching power supply circuit operated in the AHB mode of the present disclosure.
FIG. 8 is a schematic structural diagram of the first implementation manner of the switching power supply circuit operated in the LLC mode of the present disclosure.
FIG. 9 is a schematic structural diagram of the second implementation manner of the switching power supply circuit of the present disclosure.
FIG. 10 is a schematic structural diagram of the second implementation manner of the switching power supply circuit operated in the AHB mode of the present disclosure.
FIG. 11 is a schematic structural diagram of the second implementation manner of the switching power supply circuit operated in the LLC mode of the present disclosure.
FIG. 12 is a schematic structural diagram of the third implementation manner of the switching power supply circuit of the present disclosure.
FIG. 13 is a schematic structural diagram of the third implementation manner of the switching power supply circuit operated in the AHB mode of the present disclosure.
FIG. 14 is a schematic structural diagram of the third implementation manner of the switching power supply circuit operated in the LLC mode of the present disclosure.

### DETAILED DESCRIPTION

The implementations of the present disclosure are described below through specific embodiments, and those skilled in the art can easily understand other advantages and effects of the present disclosure from the contents disclosed in this specification. The present disclosure can also be implemented or applied through other different specific embodiments, and various details in this specification can also be modified or changed based on different viewpoints and applications without departing from the spirit of the present disclosure.

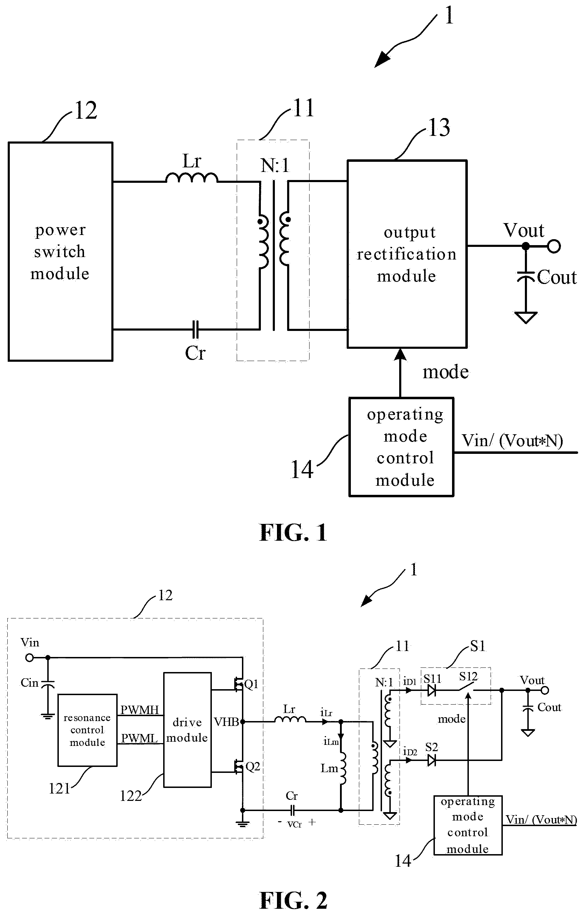

Please refer to FIG. 1 to FIG. 14. It should be noted that the drawings provided in this embodiment are merely used to illustrate the basic concept of the present disclosure in a schematic way. Accordingly, only the components related to the present disclosure are shown in the drawings instead of being drawn according to the number, shape and size of the components in actual implementations. The type, number and ratio of each component in the actual implementation can be arbitrarily changed, and its component layout configurations may also be more complicated.

As shown in FIG. 1, the present disclosure provides a switching power supply circuit 1, and the switching power supply circuit 1 includes: a transformer 11, a resonant capacitor Cr, a resonant inductor Lr, a power switch module 12, an output rectification module 13 and an operating mode control module 14.

As shown in FIG. 1, the transformer 11 includes a primary winding and a secondary winding.

Specifically, the structure and the number of the primary windings in the transformer 11 are determined by the structure of the power switch module 12 (including but not limited to a full bridge or a half bridge). The structure and the number of the secondary windings in the transformer 11 are determined by the structure of the output rectification module 13 (including but not limited to a full bridge or a half bridge). Specific settings can be made according to actual applications, which are not one-by one limited here.

As shown in FIG. 1, the resonant capacitor Cr and the resonant inductor Lr are connected in series with the primary winding to form a series structure.

Specifically, in the embodiment, the resonant inductor Lr and the resonant capacitor Cr are located on two sides of the primary winding respectively. The resonant inductor Lr is located on the high-voltage side, and the resonant capacitor Cr is located on the low-voltage side. In actual use, the resonant capacitor Cr, the resonant inductance Lr and the primary winding are connected in series to form a resonant circuit with the power switch module 12, and the specific locations are not limited to the embodiment.

As shown in FIG. 1, the power switch module 12 receives the input voltage Vin and connects two terminals of the series structure to form the resonant circuit.

Specifically, the power switch module 12 includes a plurality of power switches to form a half-bridge structure or full-bridge structure, which maybe set according to actual needs.

As shown in FIG. 1, the output rectification module 13 is connected to the secondary winding and generates an output voltage.

Specifically, the output rectification module 13 includes, but is not limited to, a half-bridge rectification structure or a full-bridge rectification structure, which maybe set according to actual needs.

As shown in FIG. 1, the operating mode control module 14 receives the input voltage Vin and the output voltage Vout, and controls the output rectification module 13 to switch the operating mode based on the ratio of the input voltage Vin to the output voltage Vout.

Specifically, when the ratio of the input voltage Vin to the output voltage Vout is smaller than or equal to a predetermined value, the output rectification module 13 is controlled such that the switching power supply circuit works in LLC mode. When the ratio of the input voltage Vin to the output voltage Vout is greater than the predetermined value, the output rectification module 13 is controlled such that the switching power supply circuit work in AHB mode.

It should be noted that the predetermined value maybe set according to actual needs. In this embodiment, the predetermined value is k^{∗}N, where N is the turns ratio of the primary winding to the secondary winding in the transformer. As an example, when the ratio of the input voltage Vin to the output voltage Vout is close to 2N, it is suitable for the switching power supply circuit to operate in LLC mode. When the ratio of the input voltage Vin to the output voltage Vout is much larger than 2N, it is suitable for the switching power supply circuit to operate in AHB mode, and k is optionally set to be a real number smaller than or equal to 5, 6, 7, 8, 9 or 10.The ratio of the input voltage Vin to the output voltage Vout suitable for operating in LLC mode and AHB mode maybe determined according to practical applications, and then the value of k is set, which is not limited to this embodiment.

The present disclosure may achieve both high efficiency and wide input and output range at the same time. It has little restriction on the conditions of application occasions and has wide application range. The present disclosure will be specifically described below based on different embodiments.

### First Embodiment

As shown in FIG. 2, the embodiment provides a switching power supply circuit 1. The switching power supply circuit 1 includes: a transformer 11, a resonant capacitor Cr, a resonant inductor Lr, a power switch module 12, an output rectification module 13 and an operating mode control module 14. For example, the operating mode control module 14 may be a controller.

As shown in FIG. 2, as an example, the power switch module 12 is a half-bridge structure, which includes a first power switch Q1 and a second power switch Q2 connected in series between the input voltage Vin and the reference ground. The first terminal of the first power switch Q1 receives the input voltage Vin, and the second terminal of the first power switch Qlis connected to the first terminal of the second power switch Q2. The second terminal of the second power switch Q2 is grounded. The second terminal of the first power switch Q1 and the first terminal of the second power switch Q2 are grounded through the resonant inductor Lr, the primary winding of the transformer 11 and the resonant capacitor Cr in sequence (both terminals of the primary winding are further connected in parallel with a magnetizing inductor Lm) to form a resonant circuit. In this embodiment, the power switch module 12 further includes a resonance control module 121 and a drive module 122. The resonance control module 121 generates the switch control signals (PWMH and PWML). The drive module 122 drives the control terminals of the first power switch Q1 and the second power switch Q2 according to the switch control signals. The first power switch Q1 and the second power switch Q2 are complementarily turned on. In this embodiment, the first power switch Q1 and the second power switch Q2 are implemented by NMOS transistors. In actual use, the corresponding device type of the half-bridge structure may be selected according to requirements, which is not limited to this embodiment.

For example, the resonance control module 121 includes a comparator circuit. The comparator circuit compares a charge feedback signal representing an input charge of the resonance circuit with a threshold signal representing the information error output by the resonance transformer to generate an output signal. The driving module includes a RS trigger which generates the switch control signal according to the output signal of the resonance control module 121.

As another example, the power switch module 12 is a full-bridge structure, including a third power switch, a fourth power switch, a fifth power switch, and a sixth power switch. The third power switch and the fourth power switch are connected in series between the input voltage and the reference ground. The fifth power switch and the sixth power switch are connected in series between the input voltage and the reference ground. The control terminals of the third power switch, the fourth power switch, the fifth power switch and the sixth power switch receive the switch control signals. The first terminal of the series structure is connected to the connection node of the third power switch and the fourth power switch, and passes through the resonant inductor Lr, the primary winding of the transformer 11 and the resonant capacitor Cr in sequence for connecting to the connection node of the fifth power switch and the sixth power switch. The operating principle and the device type of the full-bridge structure are similar to those of the half-bridge structure, and will not be repeated here.

As shown in FIG. 2, in this embodiment, the transformer 11 includes a primary winding, a first secondary winding and a second secondary winding. A half-bridge rectification structure is used by the output rectification module 13.

Specifically, as shown in FIG. 2, in this embodiment, the output rectification module 13 includes a first switch unit S1 and a second switch unit S2. The current input terminal of the first switch unit S1 is connected to the dotted terminal of the first secondary winding, and the current output terminal of the first switch unit S1is connected to the upper plate of the output capacitor Cout. When the switching power supply circuit 1 is in LLC mode, the first switch unit S1 is turned on and rectifies the signal input to the first switch unit S1. When the switching power supply circuit 1 is in AHB mode, the first switch unit S1 is turned off. The current input terminal of the second switch unit S2 is connected to the non-dotted terminal of the second secondary winding, and the current output terminal of the second switch unit S2 is connected to the upper plate of the output capacitor Cout. When the switching power supply circuit 1 is in LLC mode, and when the switching power supply circuit 1 is in AHB mode, the signal input to the second switch unit S2 is rectified. The lower plate of the output capacitor Cout, the non-dotted terminal of the first secondary winding, and the dotted terminal of the second secondary winding are grounded.

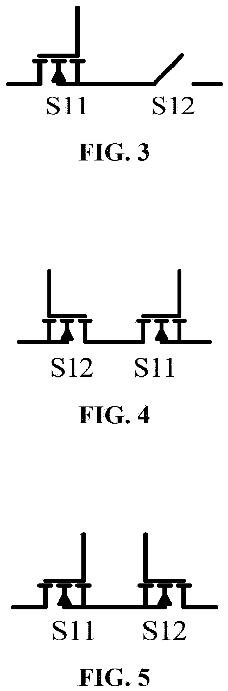

More specifically, as an implementation manner of the present disclosure, the first switch unit S1 includes a first switch S11 and a second switch S12 connected in series. The first switch S11 is a switch in a high-speed control mode. The second switch S12 is a switch in the low-speed control mode. In other words, the operating frequency of the second switch S12 is lower than the operating frequency of the first switch S11. The first switch S11 includes, but is not limited to, a synchronous rectification switch and a rectification diode (a diode maybe regarded as an uncontrolled switch). The second switch S12 includes, but is not limited to, a relay and a semiconductor switch (any semiconductor device that can realize a switch function). As illustrated in FIG. 2, as an example, the first switch S11 is a rectification diode, and the second switch S12 is a semiconductor switch. The anode of the rectification diode serves as the current input terminal of the first switch unit S1. The cathode of the rectification diode is connected to one terminal of the semiconductor switch, and the other terminal of the semiconductor switch serves as the current output terminal of the first switch unit S1. In this embodiment, the rectification diode is used for rectification. The semiconductor switch is controlled by the operating mode control module 14 to switch the operating mode. The positions of the semiconductor switch and the rectification diode may be interchanged, which will not be repeated here. As shown in FIG. 3, as another example, the first switch S11 is a synchronous rectification switch. The second switch S12 is a semiconductor switch. The drain of the synchronous rectification switch serves as the current input terminal of the first switch unit S1. The source of the synchronous rectification switch is connected to one terminal of the semiconductor switch, and the other terminal of the semiconductor switch serves as the current output terminal of the first switch unit S1. In this embodiment, the synchronous rectification switch is used for rectification. The semiconductor switch is controlled by the operating mode control module 14 to switch the operating mode. The positions of the semiconductor switch and the synchronous rectification switch may be interchanged, which will not be repeated here.

More specifically, as another implementation manner of the present disclosure, the first switch unit S1 is a bidirectional switch including two synchronous rectification switches connected in series with opposite phases. As shown in FIG. 4, the source of the second synchronous rectification switch S12 serves as the current input terminal of the first switch unit S1. The drain of the second synchronous rectification switch S12is connected to the drain of the first synchronous rectification switch S11. The source of the first synchronous rectification switch S11 serves as the current output terminal of the first switch unit S1. In this embodiment, the first synchronous rectification switch S11 (the parasitic diode) is used for rectification. The second synchronous rectification switch S12 is controlled by the operating mode control module 14 to switch operating modes (both S11 and S12 are turned off when operated in the AHB mode). As shown in FIG. 5, the positions of the first synchronous rectification switch S11 and the second synchronous rectification switch S12 maybe interchanged, which will not be repeated here.

More specifically, as shown in FIG. 2, as an implementation manner of the present disclosure, the second switch unit S2 is a rectification diode. As another implementation manner of the present disclosure, the second switch unit S2 is a synchronous rectification switch.

It should be noted that, in this embodiment, the N-type synchronous rectification switch is taken as an example. In actual use, the corresponding device type of the second switch unit S2 maybe selected based on needs, and the connection relationship maybe adjusted adaptively, which are not limited to this embodiment. Any switch capable of realizing the above-mentioned rectification function and the mode switching function is applicable for the present disclosure and is not limited to this embodiment.

As shown in FIG. 2, the operating mode control module 14 generates a mode switching signal based on Vin/(Vout^{∗}N) to control the switching power supply circuit 1 to operate in different modes.

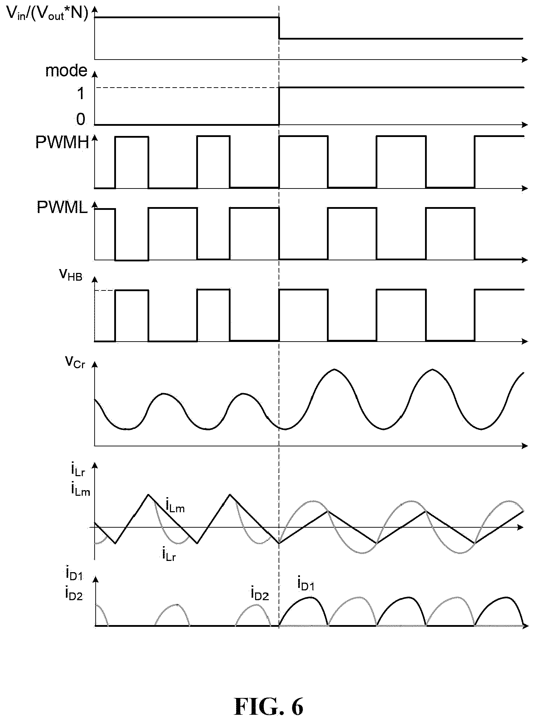

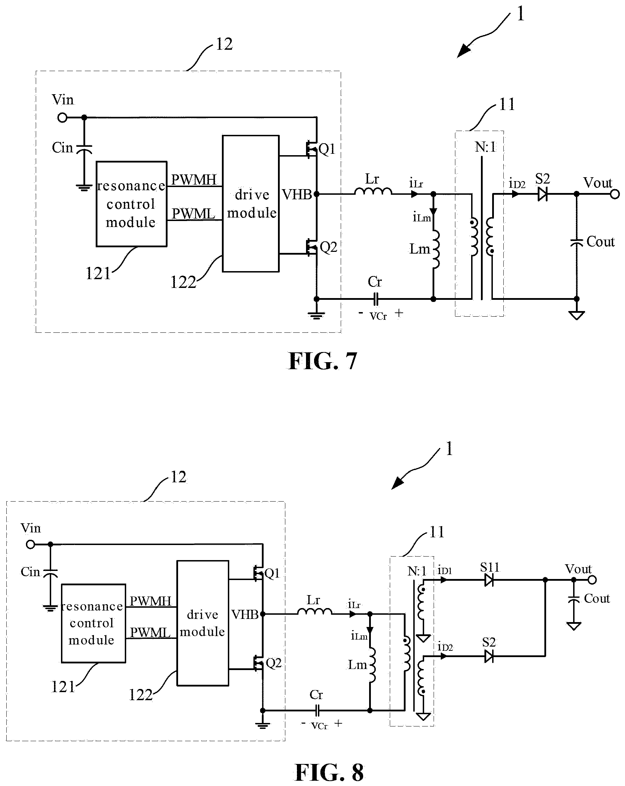

Specifically, for example, the power switch module 12 is a half-bridge structure, the rectification diode and a semiconductor switch are used as the first switch unit S1, and the rectification diode is used as the second switch unit S2 .As shown in FIG. 6, with the switching of the switch control signals PWMH and PWML, the voltage VHB of a middle node between the second terminal of the first power switch Q1 and at the first terminal of the second power switch Q2, the voltage VCr on the resonance capacitor Cr, the current iLr on the resonant inductor Lr, and the current iLm on the magnetizing inductor Lm increase or decrease correspondingly. As shown in FIG. 6 and FIG. 7, when Vin/(Vout^{∗}N) is more than 2 (merely as an example, the specific value may be set according to actual needs), the mode switching signal mode=0, the second switch S12 is turned off, and the switching power supply circuit 1 is operated in AHB mode. At this moment, the first secondary winding and the branch where the first switch is located are disconnected and do not work. Only the second secondary winding and the second switch unit S2 perform the rectification operation, and when the first power switch Q1 is turned off and the second power switch Q2 is turned on, there is a current iD2 flowing through the second power switch Q2. As such, the advantage of a wide input and output range may be achieved. As shown in FIG. 6 and FIG. 8, when Vin/(Vout^{∗}N) is close to 2, the mode switching signal mode=1, the second switch S12 is turned on, and the switching power supply circuit 1 is operated in LLC mode. At this moment, the branch where the first secondary winding and the first switch are located, and the branch where the second secondary winding and the second switch unit S2 are located all perform the rectification operation. Also, when the current in the primary winding flows into the dotted terminal, the current iD1 flows through the first switch unit S1. When the current in the primary winding flows out of the dotted terminal, the current iD2 flows through the second switch unit S2. The advantage of high efficiency may be provided.

### Second Embodiment

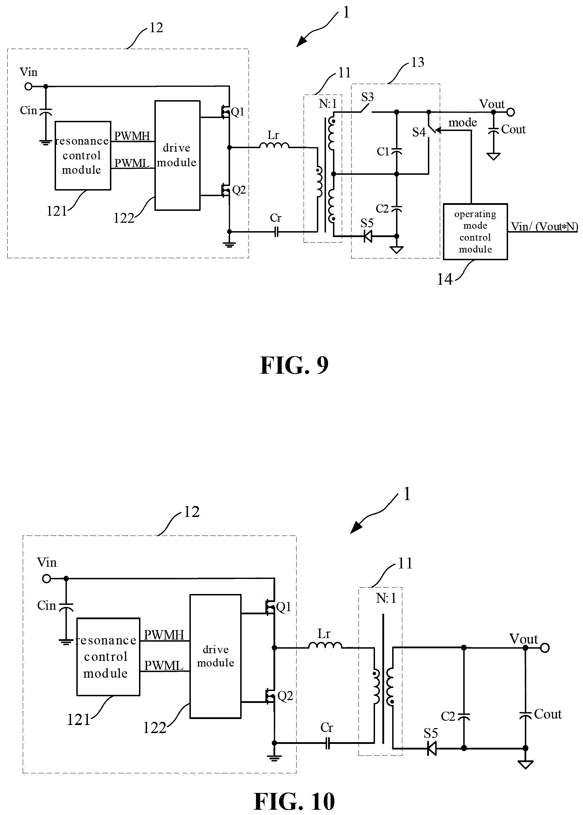

As shown in FIG. 9, the embodiment provides a switching power supply circuit 1, and the difference between the second embodiment and the first embodiment is that the structure of the output rectification module 13 is different.

As shown in FIG. 9, the secondary winding includes a third secondary winding and a fourth secondary winding. The output rectification module 13 includes a third switch unit S3, a fourth switch unit S4, a fifth switch unit S5, a first capacitor C1 and a second capacitor C2. The current input terminal of the third switch unit S3 is connected to the dotted terminal of the third secondary winding. The current output terminal of the third switch unit S3is connected to the output capacitor Cout and the upper plate of the first capacitor C1. In LLC mode, the third switch unit S3 is turned on and the signal inputted to the third switch unit S3 is rectified. In AHB mode, the third switch unit S3 is turned off. The lower plate of the first capacitor C1 is connected to the non-dotted terminal of the third secondary winding. The fourth switch unit S4 is connected in parallel with both terminals of the first capacitor C1. In LLC mode, the fourth switch unit S4 is turned off. In AHB mode, the fourth switch unit S4 is turned on. The current input terminal of the fifth switch unit S5 is grounded. The current output terminal of the fifth switch unit S5 is connected to the dotted terminal of the fourth secondary winding. In both LLC mode and AHB mode, the signal inputted to the fifth switch unit S5 is rectified. The upper plate of the second capacitor C2 is connected to the non-dotted terminal of the fourth secondary winding. The lower plate of the second capacitor C2is grounded. The lower plate of the output capacitor Cout is grounded. The non-dotted terminals of the third secondary winding are connected to the non-dotted terminal of the fourth secondary winding.

Specifically, in one embodiment, the third switch unit S3 is a bidirectional switch and comprises two synchronous rectification switches connected in series in opposite direction. In another embodiment, the third switch unit S3is a series structure of a high-speed control mode switch and a low-speed control mode switch, and the operating frequency of the low-speed control mode switch is smaller than the operating frequency of the high-speed control mode switch. For example, the high-speed control mode switch may be a synchronous rectification switch or a rectification diode, and the low-speed control mode switch is a relay or a semiconductor switch. The specific structure may refer to the first embodiment, which will not be repeated here.

Specifically, the fourth switch unit S4 includes, but is not limited to, a relay and a semiconductor switch. Any device capable of switching the mode is applicable for the present disclosure.

Specifically, the fifth switch unit S5 includes, but is not limited to, a synchronous rectification switch and a rectification diode. Any device capable of realizing a rectification function is applicable for the present disclosure.

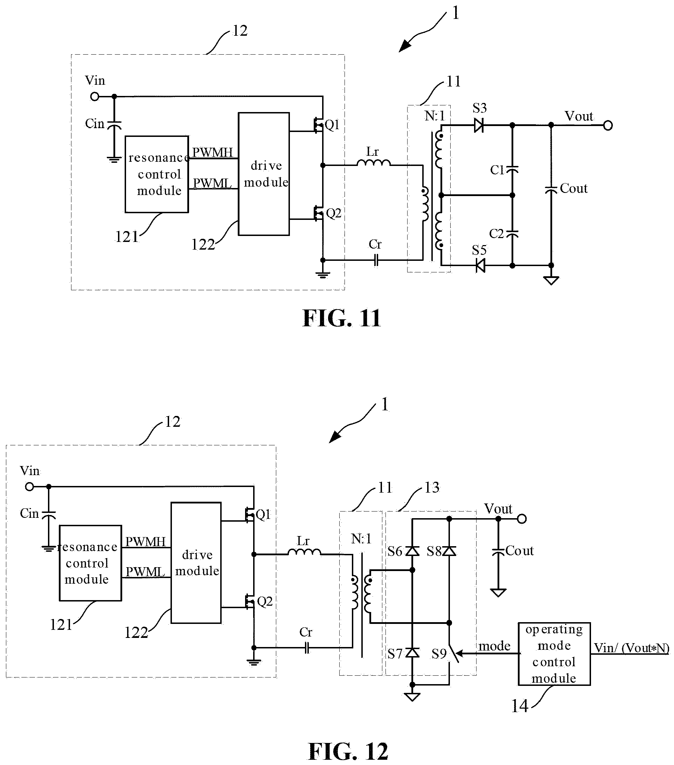

As shown in FIG. 10, taking the third switch unit S3 as an example of a series structure of a rectification diode and a semiconductor switch, when Vin/(Vout^{∗}N) is more than 2, the mode switching signal mode=0. The slow control mode switch in the third switch unit S3 is turned off. The fourth switch unit S4 is turned on. The switching power supply circuit 1 is operated in AHB mode. At this moment, the branch where the third secondary winding and the third switch unit S3 are located is disconnected and does not work. Only the fourth secondary winding and the fifth switch unit S5 perform the rectification operation. As shown in FIG. 11, when Vin/(Vout^{∗}N) is close to 2, the mode switching signal mode=1. The slow control mode switching switch in the third switch unit S3 is turned on. The fourth switch unit S4 is disconnected. The switching power supply circuit 1 is operated in LLC mode. At this moment, the third secondary winding, the third switch unit, the fourth secondary winding and the fifth switch unit S5 all work. The output voltage Vout is the sum of the voltages on the first capacitor C1 and the second capacitor C2 (The circuit on the output side of the switching power supply circuit 1is a double-voltage rectification circuit).

It should be noted that other structures and operating principles of the switching power supply circuit 1 of this embodiment are similar to those of the first embodiment and will not be repeated here.

### Third Embodiment

As shown in FIG. 12, this embodiment provides a switching power supply circuit 1, and the difference of the third embodiment from the first embodiment and the second embodiment is that the structure of the output rectification module 13 is different. In this embodiment, the output rectification module 13 utilizes the full bridge rectification structure.

As shown in FIG. 12, the secondary winding includes a fifth secondary winding. The output rectification module 13 includes a sixth switch unit S6, a seventh switch unit S7, an eighth switch unit S8 and a ninth switch unit S9. The current input terminal of the sixth switch unit S6 is connected to the dotted terminal of the fifth secondary winding. The current output terminal of the sixth switch unit S6is connected to the upper plate of the output capacitor Cout. In both LLC mode and AHB mode, the signal inputted to the sixth switch unit S6 is rectified. The current input terminal of the seventh switch unit S7 is grounded, and the current output terminal of the seventh switch unit S7is connected to the current input terminal of the sixth switch unit S6. In both LLC mode and AHB mode, the signal inputted to the seventh switch unit S7 is rectified. The current input terminal of the eighth switch unit S8 is connected to the non-dotted terminal of the fifth secondary winding. The current output terminal of the eighth switch unit S8is connected to the upper plate of the output capacitor Cout. In both LLC mode and AHB mode, the signal inputted to the eighth switch unit S8 is rectified. The current input terminal of the ninth switch unit S9 is grounded. The current output terminal of the ninth switch unit S9is connected to the current input terminal of the eighth switch unit S8. When switching power supply circuit 1is in LLC mode, the ninth switch unit S9 is turned on and rectifies the signal inputted to the ninth switch unit S9. When switching power supply circuit 1 is in AHB mode, the ninth switch unit S9 is turned off. The lower plate of the output capacitor Cout is grounded.

Specifically, the sixth switch unit S6, the seventh switch unit S7 and the eighth switch unit S8 include, but are not limited to, a synchronous rectification switch and a rectification diode. Any device capable of realizing a rectification function is applicable for the present disclosure. It should be noted that the device types of the sixth switch unit S6, the seventh switch unit S7 and the eighth switch unit S8 maybe the same or different.

Specifically, in one embodiment, the ninth switch unit S9 is a bidirectional switch comprising two synchronous rectification switches connected in series in opposite phases. In another embodiment, the ninth switch unit S9 is a series structure of a high-speed control mode switch and a low-speed control mode switch, and the operating frequency of the low-speed control mode switch is smaller than the operating frequency of the high-speed control mode switch. For example, the high-speed control mode switch may be a synchronous rectification switch or a rectification diode, and the low-speed control mode switch is a relay or a semiconductor switch. The specific structure can refer to the first embodiment, which will not be repeated here.

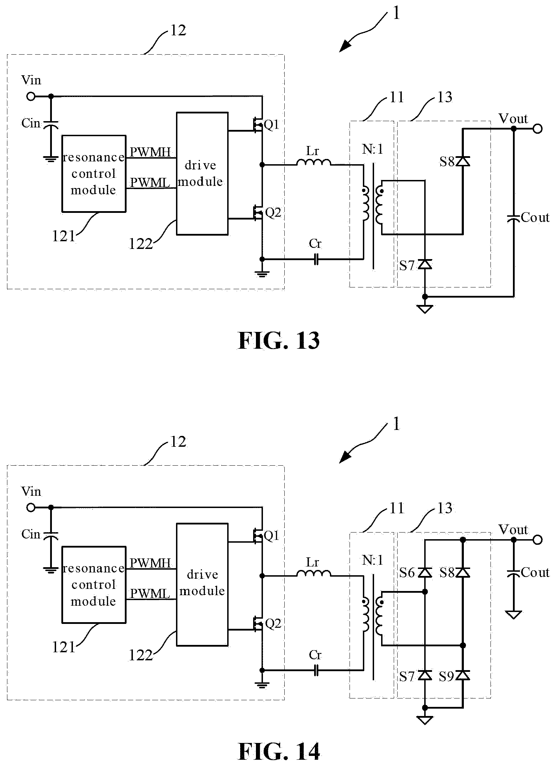

As shown in FIG. 13, taking an example that the sixth switch unit S6, the seventh switch unit S7 and the eighth switch unit S8 are the rectification diodes, and the ninth switch unit S9 is a series structure of a rectification diode and a semiconductor switch, when Vin/(Vout^{∗}N) is more than 2, the mode switching signal mode=0. The slow control mode switch in the ninth switch unit S9 is turned off. The switching power supply circuit 1 is operated in AHB mode. When the current of the primary winding flows out from the dotted terminal, the current passes from the non-dotted terminal of the fifth secondary winding through the eighth switch unit S8, the output capacitor Cout, the seventh switch unit S7 in sequential, and returns to the dotted terminal of the fifth secondary winding, thereby realizing rectification output. As shown in FIG. 14, when Vin/(Vout^{∗}N) is close to 2, the mode switching signal mode=1. The slow control mode switching switch in the ninth switch unit S9 is turned on. The switching power supply circuit 1 is operated in LLC mode. When the current of the primary winding flows out from the dotted terminal, the current passes from the non-dotted terminal of the fifth secondary winding through the eighth switch unit S8, the output capacitor Cout, the seventh switch unit S7 in sequential, and returns to the dotted terminal of the fifth secondary winding. When the current of the primary winding flows into the dotted terminal, the current passes from the dotted terminal of the fifth secondary winding through the sixth switch unit S6, the output capacitor Cout, and the ninth switch unit S9 in sequential, and returns to the non-dotted terminal of the fifth secondary winding, thereby realizing rectification output.

It should be noted that other structures and operating principles of the switching power supply circuit 1 of this embodiment are similar to those of the embodiment one and will not be repeated here.

Based on the foregoing, the present disclosure provides a switching power supply circuit including: a transformer, comprising a primary winding and a secondary winding; a resonant capacitor and a resonant inductor, connected in series with the primary winding to form a series structure; a power switch module, receiving an input voltage and connecting two terminals of the series structure to form a resonance circuit; an output rectification module, connected to the secondary winding and generating an output voltage; an operating mode control module, receiving the input voltage and the output voltage, controlling the output rectification module such that the switching power supply circuit is operated in LLC mode when a ratio of the input voltage and the output voltage is smaller than or equal to a predetermined value, and controlling the output rectification module such that the switching power supply circuit is operated in AHB mode when the ratio of the input voltage and the output voltage is greater than the predetermined value. The disclosure unifies the topologies of AHB and LLC and enables the switching power supply circuit to have the advantages of high efficiency and wide input and output range at the same time by switching the topology operating modes. Therefore, the present disclosure effectively overcomes various shortcomings in the prior art, and thus provides high industrial utilization value.

The above-mentioned embodiments merely illustrate the principles and effects of the present disclosure but are not intended to limit the present disclosure. Persons skilled in the art can modify or change the above embodiments without departing from the spirit and scope of the present disclosure. Therefore, all equivalent modifications or changes made by persons skilled in the art of the technical field without departing from the spirit and technical idea disclosed in the present disclosure should still be covered by the claims of the present disclosure.

## Claims

1. A switching power supply circuit (1), at least comprising:
a transformer (11), comprising a primary winding and a secondary winding;
a resonant capacitor (Cr) and a resonant inductor (Lr), connected in series with the primary winding to form a series structure;
a power switch module (12), configured to receive an input voltage (Vin) and connecting two terminals of the series structure to form a resonance circuit;
an output rectification module (13), connected to the secondary winding and configured to generate an output voltage (Vout);
an operating mode control module (14), configured to receive the input voltage (Vin) and the output voltage (Vout), wherein the output rectification module (13) is controlled such that the switching power supply circuit is operated in an inductor-inductor-capacitor, LLC, mode when a ratio of the input voltage (Vin) and the output voltage (Vout) is smaller than or equal to a predetermined value, and the output rectification module (13) is controlled such that the switching power supply circuit is operated in an asymmetrical half-bridge, AHB, mode when the ratio of the input voltage (Vin) and the output voltage (Vout) is greater than the predetermined value.

2. The switching power supply circuit according to claim 1, wherein the power switch module comprises a first power switch (Q1) and a second power switch (Q2) connected in series between the input voltage and a reference ground, control terminals of the first power switch (Q1) and the second power switch (Q2) receive switch control signals, a first terminal of the series structure is connected to a connection node of the first power switch (Q1)and the second power switch (Q2), and a second terminal of the series structure is grounded.

3. The switching power supply circuit according to claim 1 or 2, wherein the power switch module comprises a third power switch, a fourth power switch, a fifth power switch and a sixth power switch, wherein the third power switch and the fourth power switch are connected in series between the input voltage and the reference ground, the fifth power switch and the sixth power switch are connected in series between the input voltage and the reference ground, control terminals of the third power switch, the fourth power switch, the fifth power switch and the sixth power switch receive the switch control signals; a first terminal of the series structure is connected to a connection node of the third power switch and the fourth power switch, and a second terminal of the series structure is connected to a connection node of the fifth power switch and the sixth power switch.

4. The switching power supply circuit according to any one of claims 1 to 3, wherein the predetermined value is k^{∗}N, wherein k is a real number smaller than or equal to 5, and N is a turns ratio of the primary winding and the secondary winding in the transformer.

5. The switching power supply circuit according to any one of claims 1to 4, wherein:
the secondary winding comprises a first secondary winding and a second secondary winding; the output rectification module comprises a first switch unit (S1) and a second switch unit (S2);
a current input terminal of the first switch unit (S1) is connected to a dotted terminal of the first secondary winding, and a current output terminal of the first switch unit(S1)is connected to an upper plate of an output capacitor (Cout); when the switching power supply circuit is operated in LLC mode, the first switch unit (S1) is turned on and a signal inputted to the first switch unit (S1) is rectified, and when the switching power supply circuit is operated in AHB mode, the first switch unit (S1) is turned off;
a current input terminal of the second switch unit (S2) is connected to a non-dotted terminal of the second secondary winding, and a current output terminal of the second switch unit (S2) is connected to the upper plate of the output capacitor (Cout); when the switching power supply circuit is operated in the LLC mode, and when the switching power supply circuit is operated in the AHB mode, a signal inputted to the second switch unit is rectified;
a lower plate of the output capacitor, a non-dotted terminal of the first secondary winding, and a dotted terminal of the second secondary winding are grounded.

6. The switching power supply circuit according to claim 5, wherein the first switch unit (S1) is a bidirectional switch, comprising two synchronous rectification switches connected in series in opposite phases.

7. The switching power supply circuit according to claim 5, wherein the first switch unit (S1) comprises a first switch (S11) and a second switch (S12) connected in series, and an operating frequency of the second switch (S12) is smaller than an operating frequency of the first switch (S11).

8. The switching power supply circuit according to claim 7, wherein the first switch (S11) is a synchronous rectification switch or a rectification diode, and the second switch (S12) is a relay or a semiconductor switch.

9. The switching power supply circuit according to claim 5, wherein the second switch unit (S2) is a synchronous rectification switch or a rectification diode.

10. The switching power supply circuit according to any one of claims 1to 4, wherein:
the secondary winding comprises a third secondary winding and a fourth secondary winding; the output rectification module comprises a third switch unit (S3), a fourth switch unit (S4), a fifth switch unit (S5), a first capacitor (C1) and a second capacitor (C2);
a current input terminal of the third switch unit(S3) is connected to a dotted terminal of the third secondary winding, and a current output terminal of the third switch unit(S3) is connected to an output capacitor (Cout) and an upper plate of the first capacitor; when the switching power supply circuit is operated in LLC mode, the third switch unit (S3) is turned on and a signal inputted to the third switch unit is rectified, and when the switching power supply circuit is operated in AHB mode, the third switch unit (S3) is turned off;
a lower plate of the first capacitor (C1) is connected to a non-dotted terminal of the third secondary winding;
the fourth switch unit (S4) is connected in parallel with both terminals of the first capacitor (C1), the fourth switch unit (S4) is turned off when the switching power supply circuit is operated in LLC mode, and the fourth switch unit (S4) is turned on when the switching power supply circuit is operated in AHB mode;
a current input terminal of the fifth switch unit (S5) is grounded, and a current output terminal of the fifth switch unit (S5) is connected to a dotted terminal of the fourth secondary winding g; when the switching power supply circuit is operated in the LLC mode, and when the switching power supply circuit is operated in the AHB mode, a signal inputted to the fifth switch unit is rectified;
an upper plate of the second capacitor (C2) is connected to a non-dotted terminal of the fourth secondary winding, and a lower plate of the second capacitor (C2) is grounded;
a lower plate of the output capacitor (Cout) is grounded; a non-dotted terminal of the third secondary winding is connected to a non-dotted terminal of the fourth secondary winding.

11. The switching power supply circuit according to claim 10, wherein the third switch unit (S3) is a bidirectional switch, comprising two synchronous rectification switches connected in series in opposite direction.

12. The switching power supply circuit according to claim 10, wherein the third switch unit (S3) comprises a high-speed control mode switch and a low-speed control mode switch connected in series, and an operating frequency of the low-speed control mode switch is smaller than an operating frequency of the high-speed control mode switch.

13. The switching power supply circuit according to claim 12, wherein the high-speed control mode switch is a synchronous rectification switch or a rectification diode, and the low-speed control mode switch is a relay or a semiconductor switch.

14. The switching power supply circuit according to any one of claims 10 to 13, wherein the fourth switch unit (S4) is a relay or a semiconductor switch.

15. The switching power supply circuit according to any one of claims 10 to 14, wherein the fifth switch unit (S5) is a synchronous rectification switch or a rectification diode.

16. The switching power supply circuit according to any one of claims 1to 4, wherein:
the secondary winding comprises a fifth secondary winding; the output rectification module includes a sixth switch unit (S6), a seventh switch unit (S7), an eighth switch unit (S8) and a ninth switch unit (S9);
a current input terminal of the sixth switch unit (S6) is connected to a dotted terminal of the fifth secondary winding, and a current output terminal of the sixth switch unit (S6) is connected to an upper plate of an output capacitor (Cout); a signal inputted to the sixth switch unit (S6) is rectified when the switching power supply circuit is operated in the LLC mode or when the switching power supply circuit is operated in the AHB mode;
a current input terminal of the seventh switch unit (S7) is grounded, and a current output terminal of the seventh switch unit (S7) is connected to the current input terminal of the sixth switch unit (S6); a signal inputted to the seventh switch unit (S7) is rectified when the switching power supply circuit is operated in the LLC mode and when the switching power supply circuit is operated in the AHB mode;
a current input terminal of the eighth switch unit (S8) is connected to a non-dotted terminal of the fifth secondary winding and the primary winding, and a current output terminal of the eighth switch unit (S8) is connected to the upper plate of the output capacitor (Cout); a signal inputted to the eighth switch unit (S8) is rectified when the switching power supply circuit is operated in the LLC mode and when the switching power supply circuit is operated in the AHB mode;
a current input terminal of the ninth switch unit (S9) is grounded, and a current output terminal of the ninth switch unit (S9)is connected to the current input terminal of the eighth switch unit (S8); when the switching power supply circuit is operated in LLC mode, the ninth switch unit is turned on and rectifies a signal inputted to the ninth switch unit (S9), and when the switching power supply circuit is operated in AHB mode, the ninth switch unit (S9)is turned off;
a lower plate of the output capacitor (Cout) is grounded.

17. The switching power supply circuit according to claim 16, wherein the sixth switch unit (S6) is a synchronous rectification switch or a rectification diode, the seventh switch unit (S7) is a synchronous rectification switch or a rectification diode, and the eighth switch unit(S8) is a synchronous rectification switch or a rectification diode.

18. The switching power supply circuit according to claim 16 or 17, wherein the ninth switch unit (S9) is a bidirectional switch, comprising two synchronous rectification switches connected in series in opposite direction.

19. The switching power supply circuit according to claim 16 or 17, wherein the ninth switch unit (S9) comprises a high-speed control mode switch and a low-speed control mode switch connected in series, and an operating frequency of the low-speed control mode switch is smaller than an operating frequency of the high-speed control mode switch.

20. The switching power supply circuit according to claim 19, wherein the high-speed control mode switch is a synchronous rectification switch or a rectification diode, and the low-speed control mode switch is a relay or a semiconductor switch.
